# EUROPEAN PATENT SPECIFICATION

(11) **EP 4 365 508 B1**
(45) Date of publication and mention of the grant of the patent: **14.05.2025**
(21) Application number: 23000152.1
(22) Date of filing: 06.11.2023
(51) Int. Cl.: F24S 25/613, F24S 25/65, H02S 20/23

(54) **CLAMPING SYSTEM FOR PHOTOVOLTAIC MODULES, SOLAR THERMAL PANELS OR OTHER ROOF SUPERSTRUCTURES**
BEFESTIGUNGSSYSTEM FÜR PHOTOVOLTAIKMODULE, SOLARTHERMIE-KOLLEKTOREN ODER ANDERE DACHAUFBAUTEN
SYSTÈME DE FIXATION POUR MODULES PHOTOVOLTAÏQUES, PANNEAUX SOLAIRES THERMIQUES OU AUTRES SUPERSTRUCTURES DE TOIT

(30) Priority: 07.11.2022 IT 202200022935
(43) Date of publication of application: 08.05.2024
(73) Proprietor: EV Services S.r.l., 10138 Torino (TO) (IT)
(72) Inventor: Marinelli, Giuseppe, 10138 Torino (TO) (IT)
(74) Representative: Aprà, Mario

(56) References cited:
- DE-U1- 202005 004 348
- US-A1- 2021 190 384
- US-B2- 10 663 195
- US-B2- 8 763 322

## Description

The present invention relates to a clamping system for photovoltaic modules, solar thermal panels or other roof superstructures, complete with anchoring to the roof for energy production systems from renewable sources, in particular photovoltaic modules and/or solar thermal panels, but also for any other medium weight superstructure to be positioned on the roofs and coverings of buildings.

The invention comprises a family of components and accessories, on which to insert a hanger or a pin, specially studied, designed and manufactured to make installation simple in every situation (being able to carry out adjustment on three axes) for a large range of roofs and tile models, allowing you to connect to panel holder tracks (both thermal and photovoltaic) via the hanger or pin.

### General analysis of the prior art

The need to conceive a system, as proposed by the invention, is understood when one thinks that it is necessary to place a structure on top of a roof which:
- in size may also reach those of a significant part of the roof itself,
- in terms of weight may sometimes be loaded with considerable thicknesses of snow,
- very often is installed on an already finished roof, and
- may have to be bracketed to the most disparate types of roofs (with wooden beams without a floor, with wooden beams and a wooden plank floor, with a brick and concrete floor, of old or new construction).

### Prior art

Below we examine how the problem of fixing systems, in particular photovoltaic or solar thermal systems, or other superstructures, on the roofs of buildings has been solved so far.

US 8 763 322 B2 discloses a clamping system of photovoltaic modules, solar thermal panels or other roof superstructures, including metal L brackets, a screw and metal strips.

The solution to the "clamping" problem is particularly complex if the roof consists of an inclined or pitched roof.

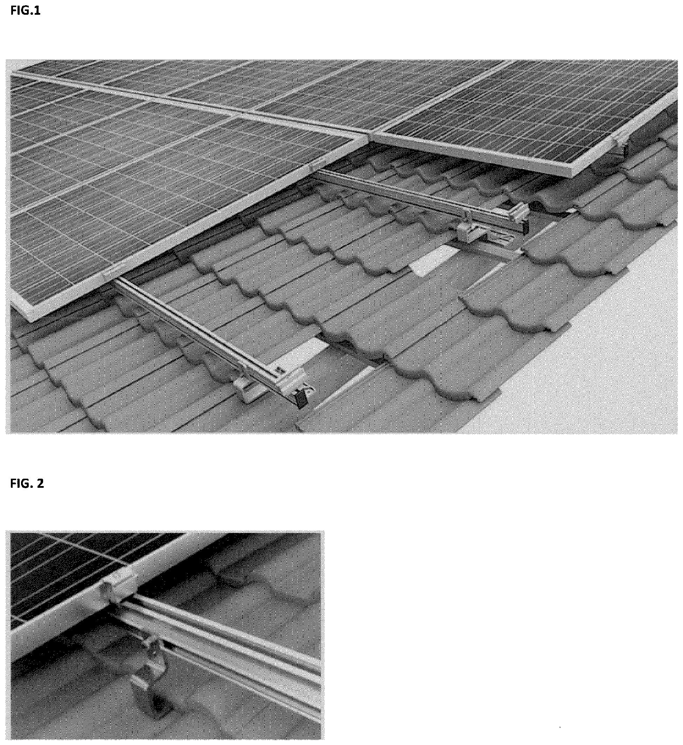

Reference shall be made to Figure 1. The photovoltaic or solar thermal panels are positioned on top of the roof covering, made of tiles or sheet metal. Generally, aluminum or steel tracks are positioned under the panels (both thermal, ST, and photovoltaic, PV). The tracks are anchored to structural elements, or in general to elements with a good load-bearing capacity, capable of maintaining their own weight (tracks and panels) and all the accidental loads to which the panels may be subjected over time: wind, snow, rain, overloads due to the passage of people for maintenance or during the assembly step of the same panels. All this must take place without compromising the roofing's resistance to atmospheric agents.

### Problems to solve

1) Ensuring the roofing is weather-tight.

Not piercing the cover or if one pierces it, ensuring the seal.

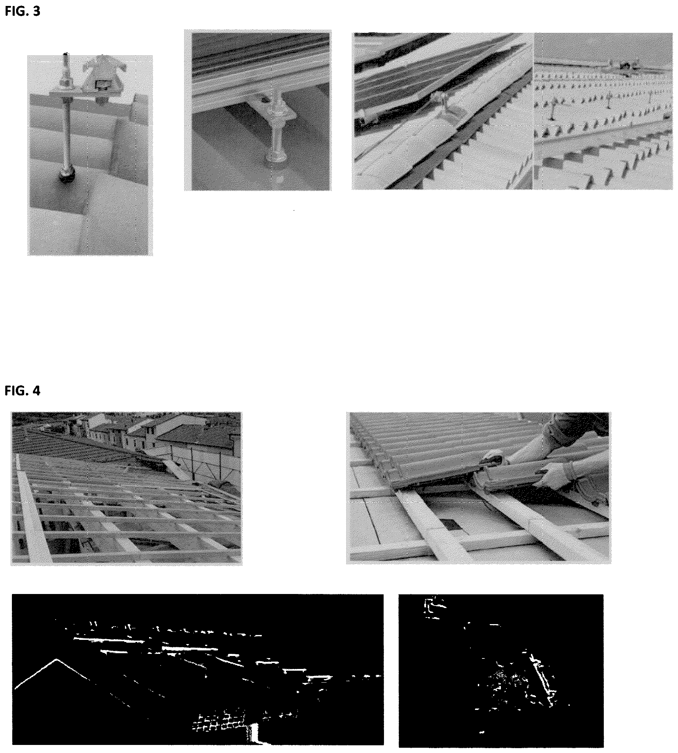

Problem which is generally solved (refer to Figure 2) by using a fairly robust hanger (such as not to bend, risking breaking the underlying tile) which fits into the space between one tile and another maintaining the continuity of overlap between the tiles. Or, alternatively (refer to Figure 3), by making a hole in the covering layer (tile or corrugated tile) and inserting a screw/pin with appropriate gaskets, which guarantee its seal against atmospheric agents (in particular, that no water passes through).

2) Anchoring the hanger or screw in a structural manner.

All the load of the own and accidental weight will act on a load-bearing element of the roof transferred through the screw or hanger elements, but it is necessary to identify what these load-bearing elements are and where they are located in the roof: continuous brick and concrete slabs, primary or secondary wooden beams of wooden roofs or other situations (refer to Figure 4).

All these solid and load-bearing points to anchor must be considered depending on the following variables:
- type of roof in brick and concrete, steel, wood or other;
- type of tile roofing (Marseillaise, coppo, Portuguese, monocoppo, etc.), sheet metal or corrugated;
- type of insulation present in the roof,
vary in three directions according to the XYZ axes.

### Criticality of known solutions

In essence, the problematic aspects of an installation on a pitched roof are:
- the difficulty in finding a sufficiently sturdy and securely held mounting location, especially if the roof is an old roof with wooden beams;
- the difficulty of finding, on a roof covered with tiles, the most appropriate fixing points and, almost always, the notable difference in their distances and center distances compared to the dimensions and center distances of the supports to be fixed to them;
- the difficulty in following the different thicknesses that there may be, depending on the characteristics of the roof and covering, from the thinnest corrugated and tile roof to the complicated ventilated and super insulated roof;
- the difficulty, especially in terms of time, of the installation.

The known clamping systems, currently most used for these jobs, are shown in the following table, in which the type of clamping is specified in the various columns: (a1) screw or (a2) hanger, (b) the reference to the figure of the drawing in which the type of clamping is illustrated, (c) the number of elements of the hanger and (d) the adjustment degrees with respect to the triplet of Cartesian axes.

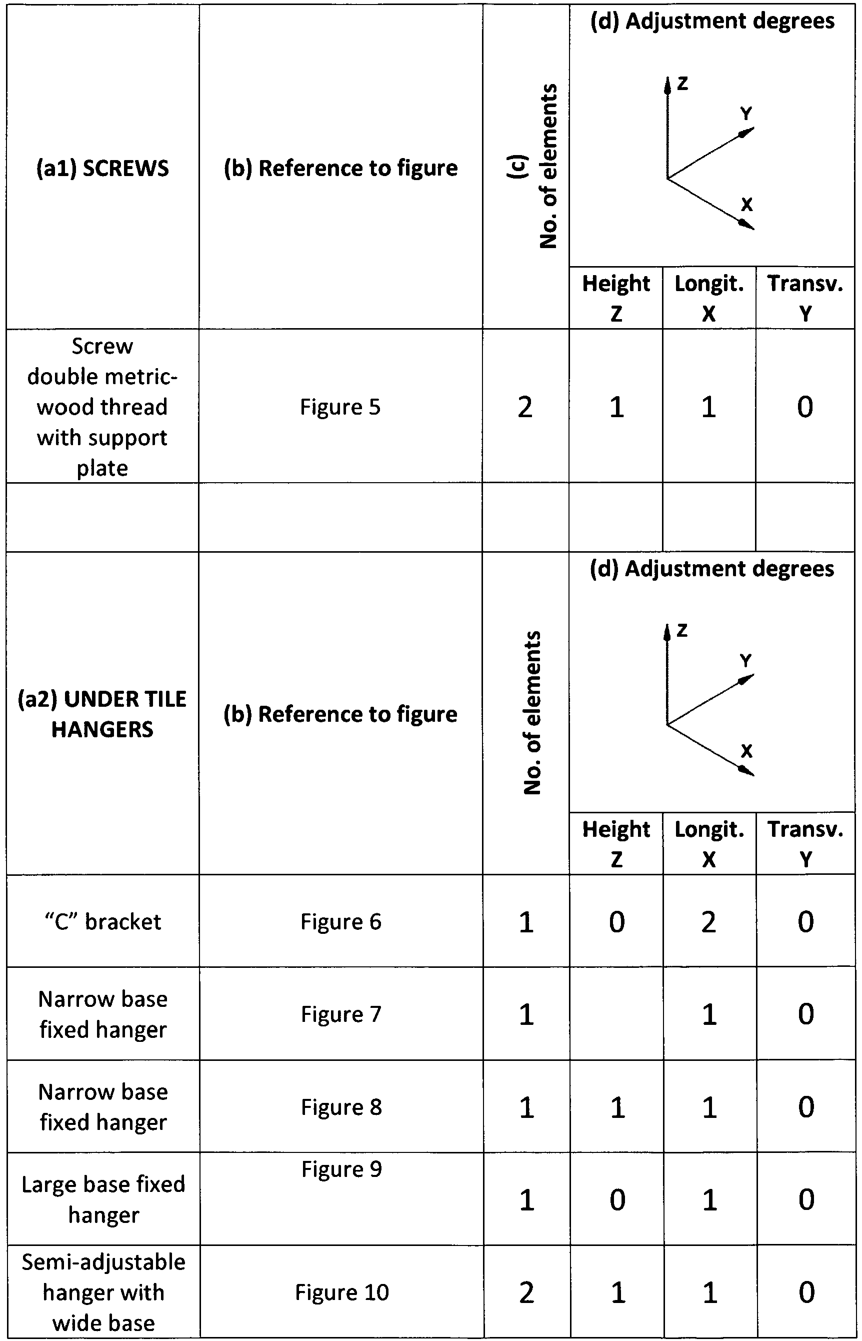

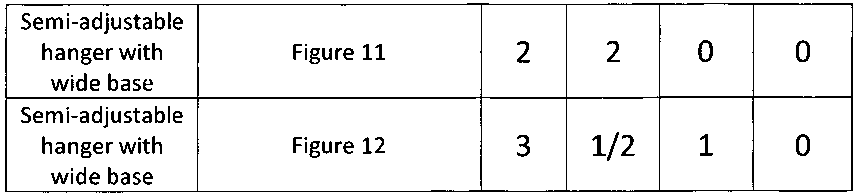

As may be seen from Table I above, none of the components of the known clamping systems allow three orders of adjustment in three different directions.

This is one of the limits to their easy applicability and in particular to the elasticity of reaching the best point for the clamping (movements on the plane according to the two normal directions X and Y).

### Advantages of the invention

The invention includes two universal components that allow you to connect horizontal and vertical anchor points with respect to the roof plane on a single load-bearing element allowing movement on three axes. The two basic components are designed to be fixed with up to four dowels each, on slotted holes so as to allow ample margin of movement for any misalignments due to drilling difficulties on difficult surfaces.

Therefore, the invention, for connecting vertical anchor points, offers an effective solution to many of the problems encountered on the hangers used up to now. In fact, it is possible to anchor the hanger to multiple load-bearing elements at the same time, allowing the loads to be distributed, for example, over two elements. It goes without saying that by distributing the load the anchoring elements may have a load-bearing capacity halved, thus increasing the number of elements that may be defined as load-bearing.

### Brief description of the drawings and summary of the invention

Figures 1 to 4 illustrate clamping systems for photovoltaic modules, solar thermal panels or other roof superstructures according to the prior art.

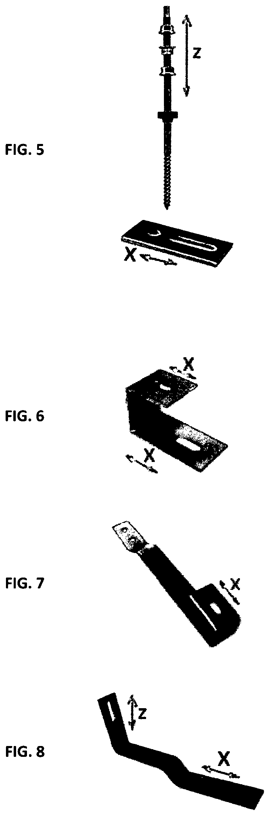

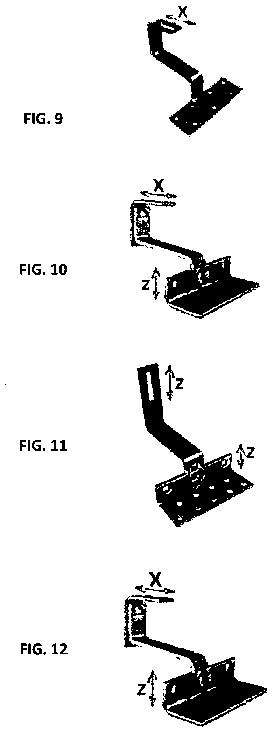

Figures 5 to 12 illustrate the means used in known clamping systems.
Figures 13 to 16 illustrate respective arrangements of means of four embodiments of the system for clamping photovoltaic modules, solar thermal panels or other roof superstructures, according to the invention.
Figures 17 to 23 illustrate the respective applications of the means arrangements according to Figures 13 to 16.

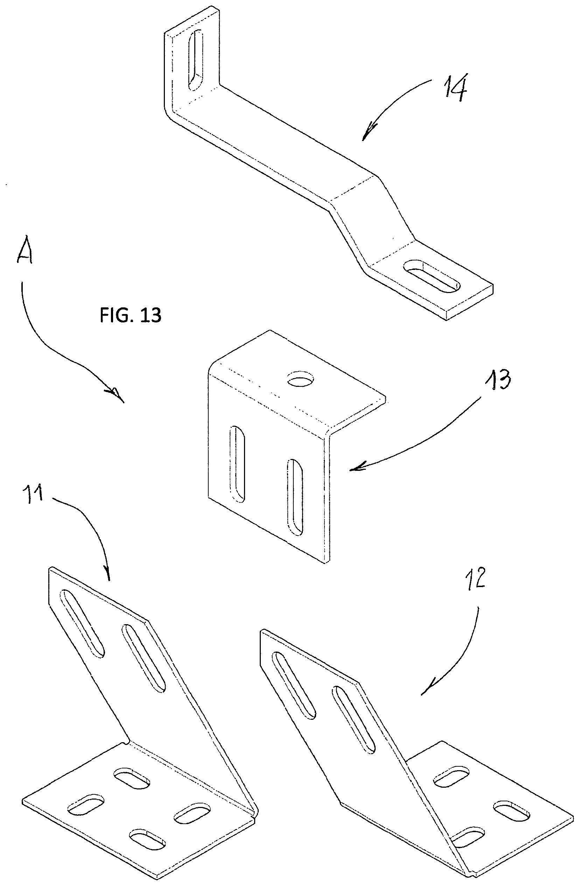

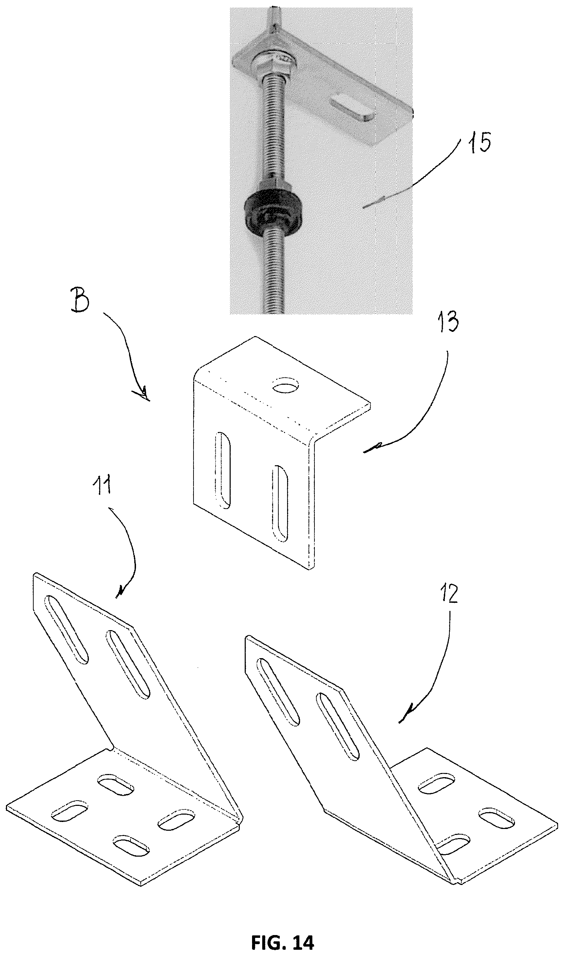

Figures 13 and 14 illustrate the clamping arrangement according to the invention for fixing photovoltaic modules and/or solar thermal panels to the floor or to struts.

With reference to Figure 13, a first arrangement A of the clamping system according to the present invention is illustrated. Said clamping arrangement A includes two first metal L brackets 11, 12 respectively, constituting the base hangers, which are fixed for example on a brick and concrete floor, with a respective wing, while their other respective wings are mutually juxtaposed. A second metal L bracket 13 is fixed, with a first wing, with respect to said juxtaposed wings of the first two L brackets 11, 12, while the second wing of said second L bracket 13 rigidly and cantileverly supports one end of a metal hanger 14, having a ramped proximal end and a distal end bent at an angle. Through the aforementioned arrangement A, the discharge of forces on the base hangers of the system is parallel to the two vertical walls, so as to encounter the greatest possible resistance without any bending moment on the folds of the sheet metal that constitute them.

With reference to Figure 14, a second arrangement B of the clamping system according to the present invention is illustrated. Said clamping arrangement B may be useful if further dimensional elasticity is not required, above the secondary hanger. It includes said two first metal L brackets 11, 12 respectively, constituting the base hangers fixed to the structure with a respective wing, while their other respective wings are mutually juxtaposed. Said second metal L bracket 13 is fixed, with a first wing, with respect to said juxtaposed wings of the first two L brackets 11, 12, while the second wing of said second L bracket 13 rigidly supports a screw 15 acting as a pivot.

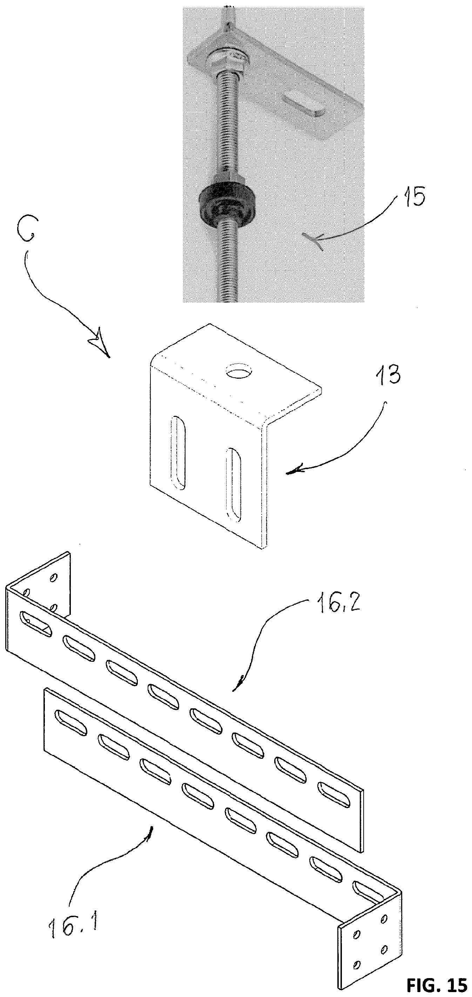

Figure 15 illustrates the clamping arrangement C according to the invention for fixing photovoltaic modules and/or solar thermal panels to ventilation slats (parallel to the gutter line).

Reference numerals 16.1, 16.2 indicate respectively two metal strips having ends bent at right angles and a linear body having a plurality of linearly aligned slot holes. Said strips 16.1, 16.2 have their respective linear bodies superimposed and fixed, so that the width of the assembly may be conveniently adjusted by means of greater or lesser overlap.

The distance between the two strips may be between a minimum of 270 mm (or even less by cutting them both with a hacksaw or a hose) and a maximum of approximately 500 mm.

The problem linked to the difficulty of finding a sturdy support, a wheelbase that is consistent with what needed or any other dimensional problem is thus resolved.

Said second metal L bracket 13 is fixed, with a first wing, with respect to said juxtaposed bodies of said two strips 16.1, 16.2, while the second wing of said second L bracket 13 rigidly supports said screw 15 acting as a pivot.

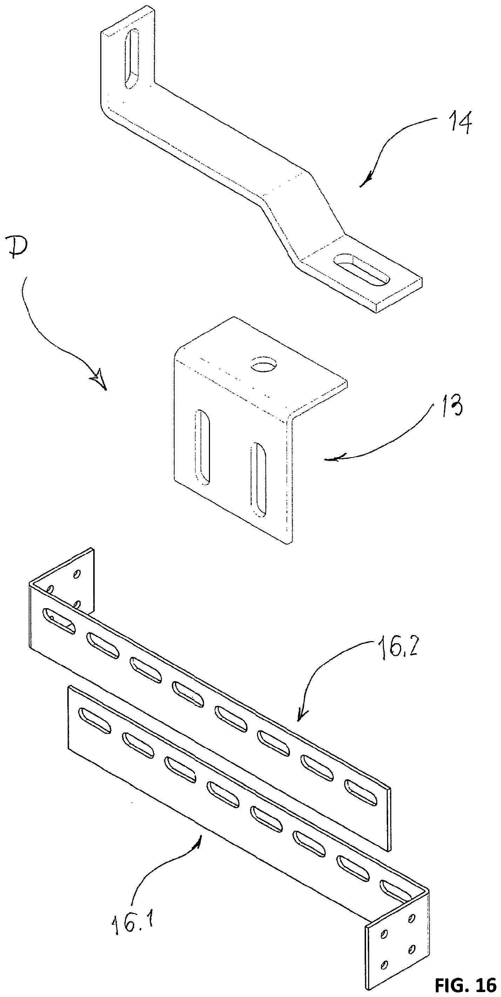

Figure 16 illustrates the clamping arrangement D according to the invention for fixing photovoltaic modules and/or solar thermal panels to ventilation slats (parallel to the gutter line).

Reference numerals 16.1, 16.2 indicate respectively two metal strips having ends bent at right angles and a linear body having a plurality of linearly aligned slot holes. Said strips 16.1, 16.2 have their respective linear bodies superimposed and fixed, so that the width of the assembly may be conveniently adjusted by means of greater or lesser overlap.

Said second metal L bracket 13 is fixed, with a first wing, with respect to said juxtaposed bodies of said two strips 16.1, 16.2, while the second wing of said second L bracket 13 rigidly and cantileverly supports one end of said metal hanger 14, having a ramped proximal end and a distal end bent at an angle.

The further detailed explanation of the invention follows with reference to further drawings relating to the embodiments described above.

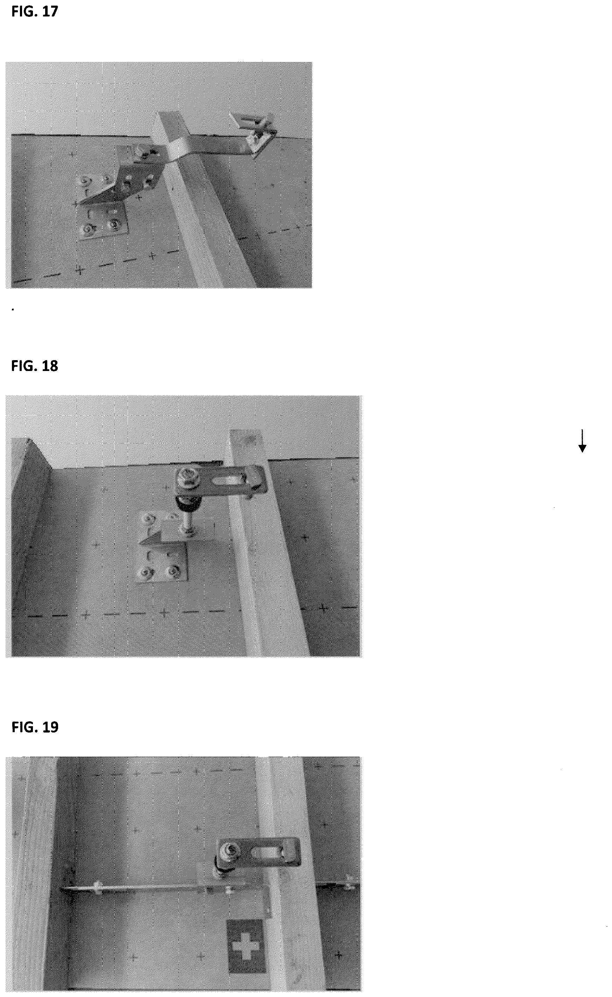

Figure 17 illustrates the application of arrangement A according to the invention for fixing to the floor or to the struts: If we have a brick and concrete floor whose consistency we are sure of, we may adopt this solution according to the invention comprising a clamping which, with just five components, allows us to reach a very high range of anchoring points in a significant range of action, with, as a terminal element, a semi-adjustable hanger with a narrow base.

As shown in the figure, the discharge of forces on the base hanger of the system is parallel to the two vertical walls, so as to encounter the greatest possible resistance without any bending moment on the folds of the sheet metal that constitute them.

Figure 18 illustrates arrangement B according to the invention in application.

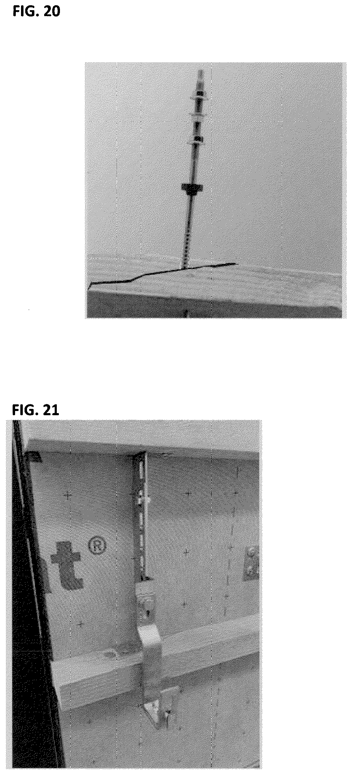

Figure 19 illustrates arrangement C according to the invention in application. If we have a new roof, the possibility of clamping the support of the photovoltaic modules (or other superstructures) to a structure with a vertical wall with the system according to the invention becomes important to avoid perforating the attic or the boarding or the insulating cladding, with the related risks of ruining the waterproofing. But it is on old roofs, possibly without boards or floors between the beams, that the potential of the invention is expressed to its maximum: small screws on each side and distributing the load on 2 slats, so as to reduce the risk of splitting and cracking of the slats and to ensure a robust seal to the structure. The slats must not be drilled with large screws/pins (even more fragile if old and partially damaged), but the system according to the invention is clamped on the sides of the slats with four small screws per side and distributing the load on the two slats, so as to reduce the risk of splitting and cracking of the slats and to ensure a robust seal to the structure (refer to Figure 20).

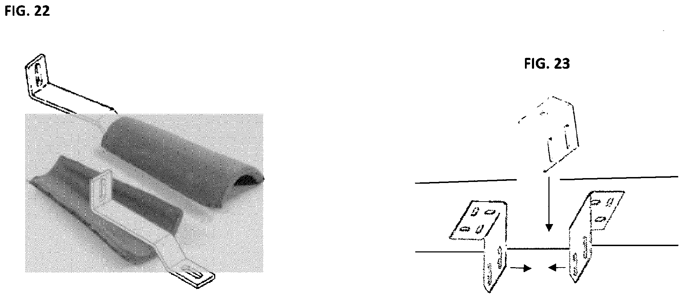

Figures 21 and 22 illustrate arrangement D according to the invention in application.

The fixing of the structure "between the slats" may also take place using the "tile holder" ones, whether they are parallel to the eave line or placed perpendicular to the same line, as is the case with overlapping tiles. The minimum width of 27 cm is compatible with this second situation.

The hanger that allows the connection with the profiles of the structure may be placed above the reversed lower tile or under the upper tile.

As may be understood from the partial and exemplary diagram of Figure 23, the invention provides a simple, versatile and elastic clamping system for photovoltaic modules, solar thermal panels or other roof superstructures or the like, which lends itself to multiple other applications. For example, vertical hangers may also be created, for example on the side of a beam.

As may be seen from the foregoing, the present invention solves in a simple and effective manner the drawbacks of the prior art.

## Claims

1. Clamping system of photovoltaic modules, solar thermal panels or other roof superstructures, **characterized by** the fact that it includes the following five components:
- a pair of first metal L brackets (11, 12),
- a second metal L bracket (13),
- a metal hanger (14), having a ramped end and an angled end,
- a screw (15), and
- a pair of metal strips (16.1, 16.2) each having a linear body, presenting a plurality of slotted holes aligned linearly, and one end bent at a right angle,
and by the fact that four different clamping arrangements are, respectively, configured by means of three of said five components, namely:
- a first arrangement (A) comprising:
- said pair of first metal L brackets (11, 12), constituting the base brackets, fixed to a roof structure element with a respective wing, while their other respective wings are mutually juxtaposed;
- said second metal L bracket (13) fixed, with a first wing, with respect to said juxtaposed wings of said pair of first L brackets (11, 12),
- said metal hanger (14), having said ramp-shaped end cantilevered fixed to the second wing of said second L bracket (13) and said distal end bent at an angle fixed to a roof superstructure element;
- a second arrangement (B) comprising:
- said pair of first metal L brackets (11, 12), constituting the base brackets, fixed to a roof structure element with a respective wing, while their other respective wings are mutually juxtaposed;
- said second metal L bracket (13) fixed, with a first wing, with respect to said juxtaposed wings of said pair of first L brackets (11, 12),
- said screw (15) arranged as a pivot, supported by the second wing of said second L bracket (13) and fixed to a roof superstructure element;
- a third clamping arrangement (C) comprising:
- said pair of metal strips (16.1, 16.2), in which the respective linear bodies are mutually superimposed, at least partially, and respectively fixed to a roof structure element and the respective angled ends are mutually distal;
- said second metal L bracket (13) fixed, with a first wing, with respect to said superimposed bodies of said pair of strips (16.1, 16.2),
- said screw (15) arranged as a pin, supported by the second wing of said second bracket (13) and fixed to a roof superstructure element;
- a fourth clamping arrangement (D) comprising:
- said pair of metal strips (16.1, 16.2), in which the respective linear bodies are mutually superimposed, at least partially, and respectively fixed to a roof structure element and the respective angled ends are mutually distal;
- said second metal L bracket (13) fixed, with a first wing, with respect to said superimposed bodies of said pair of strips (16.1, 16.2),
- said metal hanger (14), having said ramp-shaped end cantilevered fixed to the second wing of said second L bracket (13) and said distal end bent at an angle fixed to a roof superstructure element.

## Patentansprüche

1. Klemmsystem für Photovoltaikmodule, solarthermische Paneele oder andere Dachaufsatzstrukturen, **dadurch gekennzeichnet, dass** es die folgenden fünf Komponenten umfasst:
ein Paar erster metallischer L-Winkel (11, 12),
ein zweiter metallischer L-Winkel (13),
ein metallischer Aufhänger (14), mit einem geneigten Ende und einem abgewinkelten Ende,
eine Schraube (15), und
ein Paar metallischer Streifen (16.1, 16.2), von denen jeder einen linearen Körper mit einer Vielzahl von linear ausgerichteten Langlöchern und einem am Ende rechtwinklig abgebogenen Abschnitt aufweist,
und **dadurch gekennzeichnet, dass** vier unterschiedliche Klemmkonfigurationen jeweils mittels drei der genannten fünf Komponenten ausgebildet sind, nämlich:
eine erste Konfiguration (A), umfassend:
- das genannte Paar erster metallischer L-Winkel (11, 12), welche die Basiswinkel bilden und mit einem jeweiligen Schenkel an einem Dachelement befestigt sind, während ihre anderen jeweiligen Schenkel einander gegenüberliegen;
- den genannten zweiten metallischen L-Winkel (13), der mit einem ersten Schenkel in Bezug auf die gegenüberliegenden Schenkel des genannten Paares erster L-Winkel (11, 12) befestigt ist,
- den genannten metallischen Aufhänger (14), dessen geneigtes Ende freitragend an dem zweiten Schenkel des genannten zweiten L-Winkels (13) befestigt ist und dessen distales, abgewinkeltes Ende an einem Dachaufsatzelement befestigt ist;
eine zweite Konfiguration (B), umfassend:
- das genannte Paar erster metallischer L-Winkel (11, 12), welche die Basiswinkel bilden und mit einem jeweiligen Schenkel an einem Dachelement befestigt sind, während ihre anderen jeweiligen Schenkel einander gegenüberliegen;
- den genannten zweiten metallischen L-Winkel (13), der mit einem ersten Schenkel in Bezug auf die gegenüberliegenden Schenkel des genannten Paares erster L-Winkel (11, 12) befestigt ist,
- die genannte Schraube (15), die als Drehachse angeordnet ist, von dem zweiten Schenkel des genannten zweiten L-Winkels (13) gehalten wird und an einem Dachaufsatzelement befestigt ist;
eine dritte Klemmkonfiguration (C), umfassend:
- das genannte Paar metallischer Streifen (16.1, 16.2), deren lineare Körper zumindest teilweise übereinander liegen und jeweils an einem Dachelement befestigt sind, wobei deren abgewinkelte Enden voneinander entfernt sind;
- den genannten zweiten metallischen L-Winkel (13), der mit einem ersten Schenkel in Bezug auf die überlappenden Körper des genannten Paars von Streifen (16.1, 16.2) befestigt ist,
- die genannte Schraube (15), die als Achse angeordnet ist, von dem zweiten Schenkel des genannten zweiten Winkels (13) gehalten wird und an einem Dachaufsatzelement befestigt ist;
eine vierte Klemmkonfiguration (D), umfassend:
- das genannte Paar metallischer Streifen (16.1, 16.2), deren lineare Körper zumindest teilweise übereinander liegen und jeweils an einem Dachelement befestigt sind, wobei deren abgewinkelte Enden voneinander entfernt sind;
- den genannten zweiten metallischen L-Winkel (13), der mit einem ersten Schenkel in Bezug auf die überlappenden Körper des genannten Paars von Streifen (16.1, 16.2) befestigt ist,
- den genannten metallischen Aufhänger (14), dessen geneigtes Ende freitragend an dem zweiten Schenkel des genannten zweiten L-Winkels (13) befestigt ist und dessen distales, abgewinkeltes Ende an einem Dachaufsatzelement befestigt ist.

## Revendications

1. Système de fixation de modules photovoltaïques, de panneaux solaires thermiques ou d'autres superstructures de toiture, **caractérisé en ce qu'**il comprend les cinq composants suivants :
une paire de premières équerres métalliques en L (11, 12),
une seconde équerre métallique en L (13),
un crochet métallique (14), présentant une extrémité en rampe et une extrémité coudée,
une vis (15), et
une paire de bandes métalliques (16.1, 16.2), chacune présentant un corps linéaire, présentant une pluralité de trous oblongs alignés linéairement, et une extrémité coudée à angle droit,
et **en ce que** quatre configurations de fixation différentes sont, respectivement, mises en œuvre au moyen de trois desdits cinq composants, à savoir :
une première configuration (A) comprenant :
- ladite paire de premières équerres métalliques en L (11, 12), constituant les équerres de base, fixées à un élément de structure de toiture par une aile respective, tandis que leurs autres ailes respectives sont juxtaposées ;
- ladite seconde équerre métallique en L (13) fixée, par une première aile, par rapport auxdites ailes juxtaposées de ladite paire de premières équerres en L (11, 12),
- ledit crochet métallique (14), dont l'extrémité en forme de rampe est en porte-à-faux fixée à la seconde aile de ladite seconde équerre en L (13), et dont l'extrémité distale coudée est fixée à un élément de superstructure de toiture ;
une seconde configuration (B) comprenant :
- ladite paire de premières équerres métalliques en L (11, 12), constituant les équerres de base, fixées à un élément de structure de toiture par une aile respective, tandis que leurs autres ailes respectives sont juxtaposées ;
- ladite seconde équerre métallique en L (13) fixée, par une première aile, par rapport auxdites ailes juxtaposées de ladite paire de premières équerres en L (11, 12),
- ladite vis (15) agencée comme pivot, supportée par la seconde aile de ladite seconde équerre en L (13) et fixée à un élément de superstructure de toiture ;
une troisième configuration de fixation (C) comprenant :
- ladite paire de bandes métalliques (16.1, 16.2), dont les corps linéaires respectifs sont superposés, au moins partiellement, et respectivement fixés à un élément de structure de toiture, et dont les extrémités coudées respectives sont mutuellement distales ;
- ladite seconde équerre métallique en L (13) fixée, par une première aile, par rapport auxdits corps superposés de ladite paire de bandes (16.1, 16.2),
- ladite vis (15) agencée comme axe, supportée par la seconde aile de ladite seconde équerre (13) et fixée à un élément de superstructure de toiture ;
une quatrième configuration de fixation (D) comprenant :
- ladite paire de bandes métalliques (16.1, 16.2), dont les corps linéaires respectifs sont superposés, au moins partiellement, et respectivement fixés à un élément de structure de toiture, et dont les extrémités coudées respectives sont mutuellement distales ;
- ladite seconde équerre métallique en L (13) fixée, par une première aile, par rapport auxdits corps superposés de ladite paire de bandes (16.1, 16.2),
- ledit crochet métallique (14), dont l'extrémité en forme de rampe est en porte-à-faux fixée à la seconde aile de ladite seconde équerre en L (13), et dont l'extrémité distale coudée est fixée à un élément de superstructure de toiture.
